# EUROPÄISCHE PATENTANMELDUNG

(11) **EP 4 215 723 A1**
(43) Veröffentlichungstag der Anmeldung: **26.07.2023**
(21) Anmeldenummer: 22153078.5
(22) Anmeldetag: 25.01.2022
(51) Int. Cl.: F01K 25/10, F03G 4/00

(54) **STRÖMUNGSMASCHINE FÜR SUPERKRITISCHES CO2**

(71) Anmelder: Siemens Energy Global GmbH & Co. KG, 81739 München (DE)
(72) Erfinder: Glos, Stefan, 45657 Recklinghausen (DE); Schäfer, Dennis, 46045 Oberhausen (DE); Wechsung, Michael, 45470 Mülheim an der Ruhr (DE)

(57) **Zusammenfassung**

Die Erfindung betrifft eine Strömungsmaschine (3) umfassend einen Einströmbereich (10) ausgebildet zum Einströmen von superkritischem Kohlenstoffdioxid, einen Strömungskanal (9) ausgebildet zum Umwandeln der thermischen Energie des superkritischen Kohlenstoffdioxid in Bewegungsenergie, wobei die Strömungsmaschine eine variable Schluckfähigkeit aufweist.

## Beschreibung

Die Erfindung betrifft eine Strömungsmaschine umfassend einen Einströmbereich ausgebildet zum Einströmen von superkritischem Kohlenstoffdioxid, einen Strömungsbereich ausgebildet zum Umwandeln der thermischen Energie des superkritischen Kohlenstoffdioxid in Bewegungsenergie.

Des Weiteren betrifft die Erfindung ein Verfahren zum Betreiben einer für den Betrieb mit superkritischem Kohlenstoffdioxid ausgebildete Strömungsmaschine.

Die für die Nutzung der Erdwärme benötigte Technologie wurde in den letzten Jahren intensiv diskutiert. Es sind Verfahren und Systeme bekannt, in denen unterirdische Hohlräume zum Erhitzen eines zugeführten Energieaustauschmediums genutzt werden, das in der Folge an die Oberfläche zurückgeführt wird, wo es für die Energiegewinnung genutzt wird.

Geothermische Kraftwerke stellen grundsätzlich eine Alternative zu konventionellen Kraftwerken dar. Anders als Windkraft und Sonnenenergie steht die Erdwärme das ganze Jahr über ohne wesentliche Schwankungen zur Verfügung. Bei der Stromwandlung in einem Geothermie-Kraftwerk kommen üblicherweise konventionelle Methoden basierend auf Wasser bzw. Dampf oder Organic-Rankine-Kreisläufe (ORC) als indirekte Systeme zum Einsatz.

In einer als interessant eingestuften Technologie wird als alternatives Medium in aktuellen Entwicklungen superkritisches Kohlenstoffdioxid (sCO₂) in direkten und indirekten Geothermie-Anwendungen betrachtet. Verglichen mit konventioneller Geothermie, bietet dieses Konzept Vorteile durch eine effektive geothermische Wärmeentnahme und einen geringen Bedarf an Pumpenergie.

Kohlenstoffdioxid (CO₂) hat im Unterschied zu Wasser den Vorteil, dass der sogenannte kritische Punkt sich bei einem vergleichsweise niedrigen Druck- und Temperaturniveau (CO₂ ~ 73bar/31°C; Wasser: ~221bar/385°C) befindet. Daher handelt es sich dabei immer um überkritische Kreisläufe. Man nennt diese Kreisläufe daher sCO₂-Kreisläufe (sCO₂ = supercritical CO₂).

Ein wesentliches Merkmal von sCO₂-Kreisläufen ist die Verdichtung und die Injektion des Arbeitsmediums im "Flüssigkeitsnahen" Zustandsgebiet, was in einem T-S-Diagramm links vom kritischen Punkt zu sehen ist. Je kälter die Rücckühlbedingungen sind, desto größer ist die Fluiddichte, was zur Folge hat, dass eine größere Nettoleistung durch das Kraftwerk erzielt werden kann.

Bekannte Systeme besitzen ein zusätzliches Wirkprinzip auf Grund der signifikanten Differenz in der geodätischen Höhe. Die Wärmezufuhr findet im Erdreich statt, in Tiefen von mehr als 730m, wobei auch häufig Tiefen von 2000m bis 5000m erreicht werden. Dabei unterscheidet sich die mittlere Dichte vom "kalten" CO₂ - die Temperaturen liegen hierbei zwischen 10-40°C - entlang der Injektionsbohrung von der mittleren Dichte des warmen CO₂ - die Temperaturen liegen hierbei zwischen ca. 60 - 260°C - signifikant. Auf Grund dieses Dichteunterschiedes entsteht ein Naturumlauf des Mediums, der auch als Thermosiphon-Effekt bezeichnet wird.

Das Arbeitsmedium zirkuliert ohne Zugabe von mechanischer Arbeit. Die Entnahme der thermischen Energie aus der Erde kann man mit einer Zirkulationspumpe forcieren. Sie ist aber prinzipiell nicht nötig.

Auch für diese geothermischen Kreisläufe ist es wichtig, das kalte Medium möglichst weit in Richtung Flüssigkeit abzukühlen, da dadurch die Dichte am Eintritt der Injektionsbohrung, sowie die Kompressibilität des Mediums abnimmt bzw. die notwendige Kompressionsarbeit an deren Eintritt geringer wird. Der Thermosiphon-Effekt wird somit verstärkt.

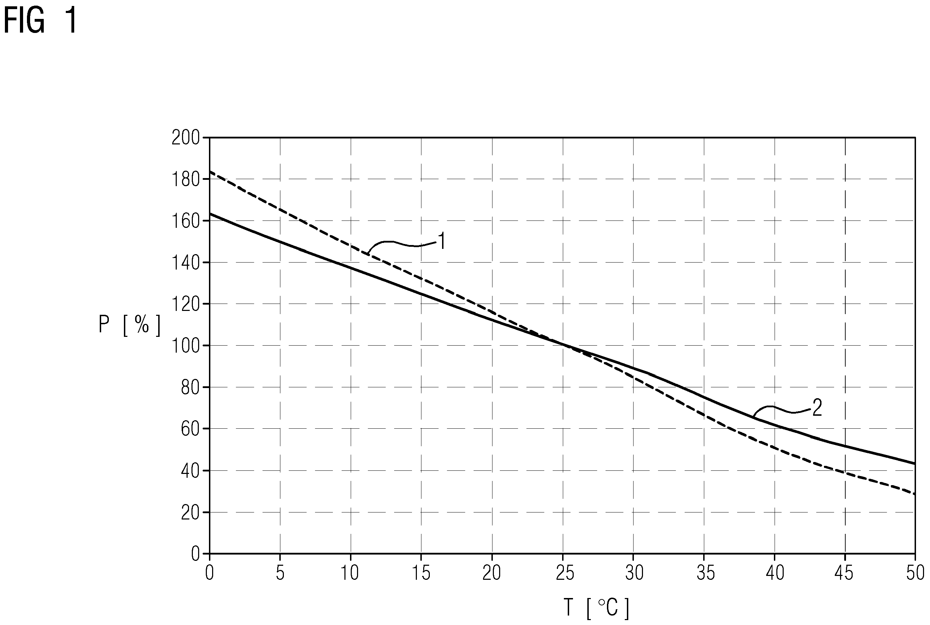

In der Figur 1 ist die Abhängigkeit der Nettoleistung P in Prozent (aufgetragen auf der Y-Achse) von der Umgebungstemperatur T in °C (aufgetragen auf der X-Achse) für zwei unterschiedliche geothermische Reservoire gezeigt. Dabei zeigt die bei 5°C obere Linie (1) ein Reservoir bei 3500m. Die bei 5°C untere Linie (2) zeigt die Abhängigkeiten bei einem Reservoir bei 5000m. So kann z.B. bei kalten Umgebungstemperaturen die Leistung im untersuchten Fall um bis zu 83% gesteigert werden.

Allerdings ist dies nur der theoretische Verlauf, der die Geometrie der Turbine nicht berücksichtigt. Mit einer einmal ausgelegten Turbine und damit mit einer festen Schluckfähigkeit der Turbine ist die mögliche Leistungssteigerung deutlich geringer.

Die Schluckfähigkeit der Turbine ist eine aus der Geometrie abgeleitete Eigenschaft der Turbine, die das Vermögen beschreibt, welcher Massenstrom bei anliegendem Druck bzw. Druckverhältnis durch die Turbine strömen kann. Bei dem zugrunde liegenden Geothermie-Konzept wird der vor der Turbine anliegende Druck im Wesentlichen durch den Druck im unterirdischen Reservoir festgelegt. Damit kann bei einer einmal ausgelegten Turbinengeometrie der Massenstrom bei gleichen Drücken nicht erhöht werden. Um die Leistungssteigerung zu erreichen, ist jedoch eine Steigerung des Massenstroms erforderlich.

Die Erfindung hat es sich ausgehend von den bekannten Problemen und Nachteilen des Standes der Technik zur Aufgabe gemacht eine Strömungsmaschine anzugeben, mit der ein höherer Massenstrom erzielt werden kann.

Des Weiteren ist es Aufgabe der Erfindung, ein Verfahren zum Betreiben einer Strömungsmaschine anzugeben, mit der der Massenstrom erhöht werden kann.

Die auf die Vorrichtung hin gerichtete Aufgabe wird durch den Patentanspruch 1 gelöst.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch den Patentanspruch 12 gelöst.

Die vom Patentanspruch 12 abhängigen und rückbezogenen Unteransprüche betreffen vorteilhafte Weiterbildungen der Erfindung.

Ein wesentliches Merkmal der Erfindung ist es, dass die Strömungsmaschine derart konstruiert ist und betrieben werden kann, dass die Schluckfähigkeit variiert und somit die Einsatzmöglichkeit und dadurch der Wirkungsrad einer Anlage erhöht werden kann.

Durch eine variable Schluckfähigkeit kann der Massenstrom durch die Turbine, bei gleichem Eintrittsdruck, erhöht und damit die Leistung des Gesamtkreislaufs entsprechend der Kühlbedingung gesteigert werden.

Dabei werden verschiedene Aspekte berücksichtigt.

Durch ein zusätzliches Bypass-Ventil wird ein zusätzlicher Massenstrom der Strömungsmaschine hinter eine definierte Anzahl von Stufen geleitet und in den verbleibenden Stufen expandiert.

Durch eine so genannte Regelstufe, die bei Dampfkraftwerken häufig zur Festdruckregelung verwendet wird und bei der in Abhängigkeit der Lastanforderungen variabel Segmente der Regelstufe durch Öffnen der jeweiligen Ventile beaufschlagt werden können, wird ebenso die Schluckfähigkeit geändert.

Ein Vorteil der Erfindung ist, dass bei sich stark ändernden Umgebungsbedingungen, ein erhöhter Massenstrom und dadurch eine Leistungssteigerung realisiert werden kann.

Durch die Anpassung der Schluckfähigkeit und der Annäherung an den theoretischen Kreislauf kann auch erreicht werden, dass die im Kreislauf verwendete Pumpe mit geringeren Leistungsschwankungen betrieben werden kann. Dadurch können Anschaffungskosten für die Pumpe verringert werden, da diese nur einen geringen Leistungsbereich abdecken muss.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Eine Darstellung der Abhängigkeit der Nettoleistung eines geothermischen CO₂ Kreislaufs von der Umgebungstemperatur
- Figur 2: Eine schematische Querschnittsansicht einer erfindungsgemäßen Strömungsmaschine
- Figur 3: Eine schematische Schnittdarstellung entlang einer III-III Linie gemäß Figur 2

Begriffe wie axial, radial und Umfang sowie Umfangsrichtung beziehen sich auf eine zu lagernde Welle bzw. Rotor 5.

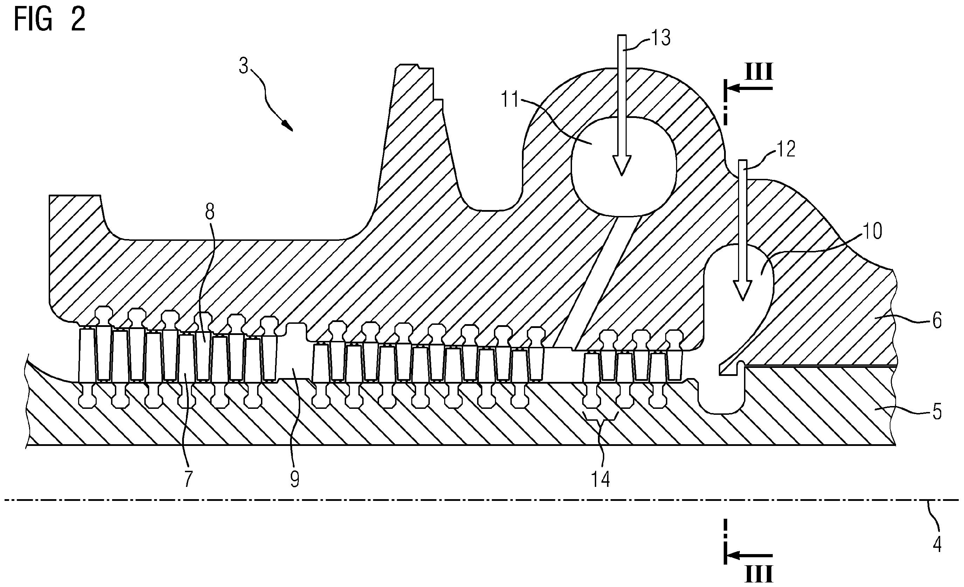

Die Figur 2 zeigt eine schematische Querschnittsansicht einer Strömungsmaschine 3. Die Strömungsmaschine 3 umfasst im Wesentlichen einen um eine Rotationsachse 4 drehbar gelagerten Rotor 5. Um den drehbar gelagerten Rotor 5 ist ein Gehäuse 6 angeordnet.

Auf der Oberfläche des Rotors 5 sind Laufschaufeln 7 angeordnet. Aus Gründen der Übersichtlichkeit ist lediglich eine Laufschaufel mit dem Bezugszeichen 7 versehen. Die Laufschaufeln 7 sind über geeignete Laufschaufelfüße, die in entsprechende Laufschaufelnuten mit dem Rotor 5 verbunden.

Auf der inneren Oberfläche des Gehäuses 6 sind Leitschaufeln 8 angeordnet. Aus Gründen der Übersichtlichkeit ist lediglich eine Leitschaufel mit dem Bezugszeichen 8 versehen. Die Leitschaufeln 8 sind über geeignete Leitschaufelfüße, die in entsprechende Leitschaufelnuten mit dem Gehäuse 6 verbunden.

Die Laufschaufeln 7 sind über den Umfang des Rotors 5 verteilt. Die Leitschaufeln 8 sind entsprechend über den inneren Umfang des Gehäuses 6 verteilt. Die Anordnung einer Reihe aus Laufschaufeln 7 und einer Reihe aus Leitschaufeln 8 wird als Schaufelstufe bezeichnet.

Zwischen dem Gehäuse 6 und dem Rotor 5 ist ein Strömungskanal 9 ausgebildet.

Im Betrieb strömt ein Strömungsmedium über einen Einströmbereich 10 in die Strömungsmaschine 3. Das Strömungsmedium kann beispielsweise superkritisches Kohlenstoffdioxid sein.

Das Strömungsmedium strömt vom Einströmbereich 10 durch den Strömungskanal 9 durch die einzelnen Schaufelstufen. Dabei wird die thermische Energie des Strömungsmediums in Bewegungsenergie des Rotors 5 umgewandelt.

Die Menge an Strömungsmedium, die durch den Strömungskanal 9 strömen kann, ist begrenzt und hängt von der so genannten Schluckfähigkeit ab. Die Schluckfähigkeit der Strömungsmaschine 3 ist eine aus der Geometrie abgeleitete Eigenschaft der Strömungsmaschine, die das Vermögen beschreibt, welcher Massenstrom des Strömungsmediums bei anliegendem Druck bzw. Druckverhältnis durch die Strömungsmaschine 3 strömen kann.

Die Strömungsmaschine 3 gemäß Figur 2 ist nun derart ausgebildet, dass die Schluckfähigkeit erhöht werden kann. Dazu wird zusätzlich zum Einströmbereich 10 ein Zusatzeinströmbereich 11 angeordnet. Der Zusatzeinströmbereich 11 ist im Gehäuse 6 angeordnet und derart ausgebildet, dass ein Zusatzmassenstrom des Strömungsmediums neben dem Hauptmassenstrom 12 im Einströmbereich 10 zusätzlich in den Strömungskanal 9 strömt. Dazu wird der Zusatzmassenstrom 13 nach einer Schaufelstufe 14 in den Strömungskanal 9 geströmt, wobei das Strömungsmedium in den verbleibenden Stufen im Strömungskanal 9 expandiert. In dem in der Figur 2 dargestelltem Ausführungsbeispiel der Strömungsmaschine 3 strömt der Zusatzmassenström nach der dritten Schaufelstufe beginnend ab dem Einströmbereich 10 in den Strömungskanal 9.

Die Schluckfähigkeit der Strömungsmaschine 3 wird dadurch erhöht und ist variabel bei gleichem Eintrittsdruck.

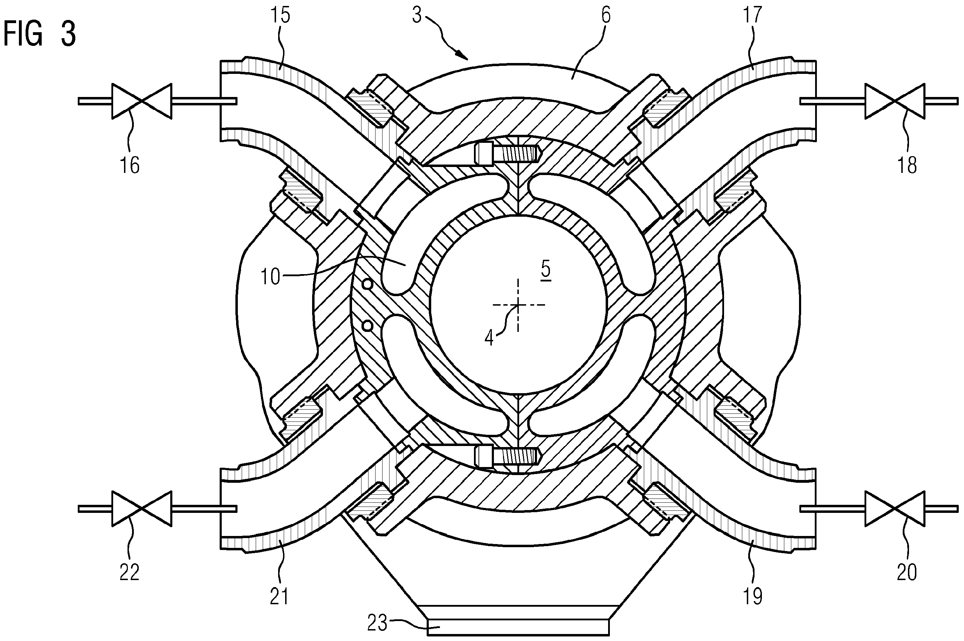

Die Figur 3 zeigt eine schematische Schnittdarstellung entlang einer III-III Linie gemäß Figur 2. Mit der Figur 2 ist eine bessere Darstellung des Einströmvorgangs des Strömungsmediums in die Strömungsmaschine 3 möglich. Die Strömungsmaschine 3 umfasst eine Regelstufe, wobei die Regelstufe eine erste Zuströmung 15 in den Einströmbereich 10 aufweist, wobei in der ersten Zuströmung 15 ein erstes Ventil 16 angeordnet ist. Durch die erste Zuströmung 15 strömt das Strömungsmedium.

In einer alternativen Ausführungsform umfasst die Strömungsmaschine 3 zusätzlich zur ersten Zuströmung 15 eine zweite Zutrömung 17 auf, wobei in der zweiten Zuströmung 17 ein zweites Ventil 18 angeordnet ist. Durch die zweite Zuströmung 17 strömt das Strömungsmedium.

In einer weiteren alternativen Ausführungsform umfasst die Strömungsmaschine 3 zusätzlich zur ersten Zuströmung 15 und zur zweiten Zuströmung 17 eine dritte Zutrömung 19 auf, wobei in der dritten Zuströmung 19 ein drittes Ventil 20 angeordnet ist. Durch die dritte Zuströmung 19 strömt ebenfalls das Strömungsmedium.

In einer weiteren alternativen Ausführungsform umfasst die Strömungsmaschine 3 zusätzlich zur ersten Zuströmung 15, zur zweiten Zuströmung 17 und zur dritten Zuströmung 19 eine vierte Zutrömung 21 auf, wobei in der vierten Zuströmung 21 ein viertes Ventil 22 angeordnet ist. Durch die vierte Zuströmung 22 strömt ebenfalls das Strömungsmedium.

Mit der ersten Zuströmung 15, der zweiten Zuströmung 17, der dritten Zuströmung 19 und der vierten Zuströmung 21 wird der Massenstrom des Strömungsfluides, das in den Einströmbereich 10 strömt über die Stellung des ersten Ventils 16, des zweiten Ventils 18, des dritten Ventils 20 und des vierten Ventils 22 geregelt.

Die Strömungsmaschine 3 ist derart ausgebildet, die Ventile 16, 18, 20 und 22 einzeln ansteuerbar sind.

Die nach dem Einströmbereich 10 erste Laufschaufelreihe wird auch als erster Laufschaufelkranz bezeichnet. Die Strömungsmaschine 3 ist dabei derart ausgebildet, dass die Regelstufe derart ausgeführt ist, dass der erste Laufschaufelkranz der Strömungsmaschine 3 teilbeaufschlagbar ist. Das bedeutet, dass die Auslegung des ersten Laufschaufelkranzes optimiert werden kann.

Die Schluckfähigkeit der Strömungsmaschine 3 wird demnach durch die Regelstufe verändert.

## Patentansprüche

1. Strömungsmaschine (3)
umfassend einen Einströmbereich (10) ausgebildet zum Einströmen von superkritischem Kohlenstoffdioxid, einen Strömungskanal (9) ausgebildet zum Umwandeln der thermischen Energie des superkritischen Kohlenstoffdioxid in Bewegungsenergie,
**gekennzeichnet durch** eine variable Schluckfähigkeit.

2. Strömungsmaschine (3) nach Anspruch 1,
**gekennzeichnet durch** eine variable Schluckfähigkeit bei gleichem Eintrittsdruck.

3. Strömungsmaschine (3) nach Anspruch 1 oder 2,
ferner umfassend einen Rotor (5) und ein um den Rotor (5) ausgebildetes Gehäuse (6),
wobei zwischen dem Rotor (5) und dem Gehäuse (6) der Strömungskanal (9) angeordnet ist,
wobei der Strömungskanal (9) mit Laufschaufeln (7) und Leitschaufeln (8) ausgebildete Stufen (14) aufweist, wobei die Strömungsmaschine (3) eine Regelstufe aufweist.

4. Strömungsmaschine (3) nach Anspruch 3,
wobei die Regelstufe eine erste Zuströmung (15) in den Einströmbereich (10) aufweist, wobei in der ersten Zuströmung (15) ein erstes Ventil (16) angeordnet ist.

5. Strömungsmaschine (3) nach Anspruch 4,
wobei zusätzlich zur ersten Zuströmung (15) eine zweite Zuströmung (17) angeordnet ist, wobei in der zweiten Zuströmung (17) ein zweites Ventil (18) angeordnet ist.

6. Strömungsmaschine (1) nach Anspruch 5,
wobei zusätzlich zur ersten (15) und zweiten Zuströmung (17) eine dritte Zuströmung (19) angeordnet ist, wobei in der dritten Zuströmung (19) ein drittes Ventil (20) angeordnet ist.

7. Strömungsmaschine (3) nach Anspruch 6,
wobei zusätzlich zur ersten (15), zweiten (17) und dritten Zuströmung (19) eine vierte Zuströmung (21) angeordnet ist, wobei in der vierten Zuströmung (21) ein viertes Ventil (22) angeordnet ist.

8. Strömungsmaschine (3) nach Anspruch 7,
wobei das erste (15), zweite (17), dritte (19) und vierte Ventil (21) derart ausgebildet sind, dass sie einzeln ansteuerbar sind.

9. Strömungsmaschine (3) nach einem der Ansprüche 3 bis 8, wobei die Regelstufe derart ausgebildet ist, dass ein erster Laufschaufelkranz der Strömungsmaschine teilbeaufschlagbar ist.

10. Strömungsmaschine (3) nach einem der vorhergehenden Ansprüche,
wobei die Strömungsmaschine (3) einen Zusatzeinströmbereich aufweist, der zum Einströmen von zusätzlichem superkritischen Kohlenstoffdioxid ausgebildet ist.

11. Strömungsmaschine nach Anspruch 8,
wobei der Zusatzeinströmbereich (11) derart ausgebildet ist, dass der zusätzliche superkritische Kohlenstoffdioxid hinter einer definierten Anzahl von Stufen geleitet wird und in den verbleibenden Stufen im Strömungkanal (9) expandiert.

12. Verfahren zum Betreiben einer für den Betrieb mit superkritischem Kohlenstoffdioxid ausgebildeten Strömungsmaschine (3),
**dadurch gekennzeichnet, dass** die Schluckfähigkeit der Strömungsmaschine (3) verändert werden kann.

13. Verfahren nach Anspruch 12,
wobei die Schluckfähigkeit durch eine Regelstufe verändert wird.

14. Verfahren nach Anspruch 12,
wobei die Regelstufe mit mehreren, insbesondere vier Zuströmungen (15, 17, 19, 21) mit jeweils einem Ventil (16, 18, 20, 22) ausgebildet wird.

15. Verfahren nach Anspruch 12, 13 oder 14,
wobei die Schluckfähigkeit durch einen Zusatzeinströmbereich (11) verändert wird, wobei in den Zusatzeinströmbereich (11) ein zusätzlicher Massenstrom an superkritischen Kohlenstoffdioxid eingeströmt wird.

16. Verfahren nach Anspruch 15,
wobei der zusätzliche Massenstrom hinter einer definierten Anzahl von Stufen geleitet und in den verbleibenden Stufen des Strömungsbereiches expandiert wird.
